(19) Europäisches Patentamt
European Patent Office
Office européen des brevets

(11) Veröffentlichungsnummer: **0 076 919**
**A1**

# (12) EUROPÄISCHE PATENTANMELDUNG

(21) Anmeldenummer: 82107982.9

(22) Anmeldetag: 31.08.82

(51) Int. Cl.[3]: **C 04 B 31/44**, C 04 B 31/26 // C04B43/10

(30) Priorität: 04.09.81 DE 3135011

(43) Veröffentlichungstag der Anmeldung: 20.04.83 Patentblatt 83/16

(84) Benannte Vertragsstaaten: BE DE FR GB IT NL SE

(71) Anmelder: HOECHST AKTIENGESELLSCHAFT, Postfach 80 03 20, D-6230 Frankfurt/Main 80 (DE)

(72) Erfinder: Blaschke, Günter, Dr., Bajuwarenstrasse 36, D-8261 Winhöring (DE)
Erfinder: May, Adolf, Dr., Dahlienweg 5, D-6238 Hofheim am Taunus (DE)
Erfinder: Voetz, Franz Josef, 7-7-18 Koyama Shinagawa-ku, Tokyo 142 (JP)
Erfinder: Horn, Ute, Ostring 9a, D-6255 Dornburg (DE)

(54) **Wasserverdünnbare Hydrophobiermittel für geblähte Mineralien.**

(57) Wasserverdünnbare Hydrophobiermittel für geblähte Mineralien, bestehend aus

a) einer Verbindung der Formel

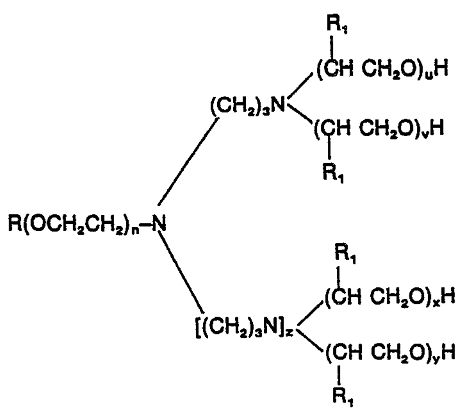

wobei R Alkyl oder Alkenyl mit jeweils 8–22 C-Atomen, vorzugsweise 14–22 C-Atomen oder $C_8$–$C_{22}$ Alkylphenyl, $R_1$ Wasserstoff oder Methyl ist, n eine Zahl von 0–4, die Summe von u + v + x + y Zahlen von 0–10, vorzugsweise 0–6 und z eine Zahl von 0–2, vorzugsweise 1, bedeutet und

b) einer niedermolekularen Säure.

EP 0 076 919 A1

Wasserverdünnbare Hydrophobiermittel für geblähte Mineralien

Als geblähte Mineralien bezeichnet man vor allem Perlit und Vermiculit, die durch Erhitzen auf 1000° bis 1200°C expandieren. Solche geblähten Mineralien werden als Öladsorptionsmittel, Verpackungsmittel, in der Hauptsache jedoch als wärmedämmenderBaustoff eingesetzt. Die Eignung der geblähten Mineralien zu diesem Zweck beruht auf ihrer sehr großen Oberfläche, die durch den Blähvorgang erzeugt wird. Nachteilig ist hierbei, daß die geblähten Mineralien wegen ihrer großen inneren Oberfläche bis zum dreifachen ihres Eigengewichtes an Wasser aufnehmen können und dann ihre Dämmwirkung verlieren. Um diesen Nachteil zu beheben, werden die geblähten Mineralien mit einem Hydrophiermittel behandelt, wie es etwa in der DE-OS 3 001 893 beschrieben ist. Das dort beschriebene Hydrophiermittel hat jedoch eine pastöse Konsistenz und läßt sich daher in der Praxis nur schlecht handhaben. Es stellte sich daher die Aufgabe, verbesserte Hydrophiermittel zu entwickeln, die flüssig sind.

Es wurde nun gefunden, daß Gemische aus N,N-Bis-(aminopropylen)-fettalkylaminen und niedermolekularen Säuren dünnflüssige,in Wasser löslicheund verdünnbare Hydrophobiermittel für geblähte Mineralien darstellen.

Gegenstand der Erfindung sind somit wasserverdünnbare Hydrophobiermittel für geblähte Mineralien bestehend aus

a) einer Verbindung der Formel

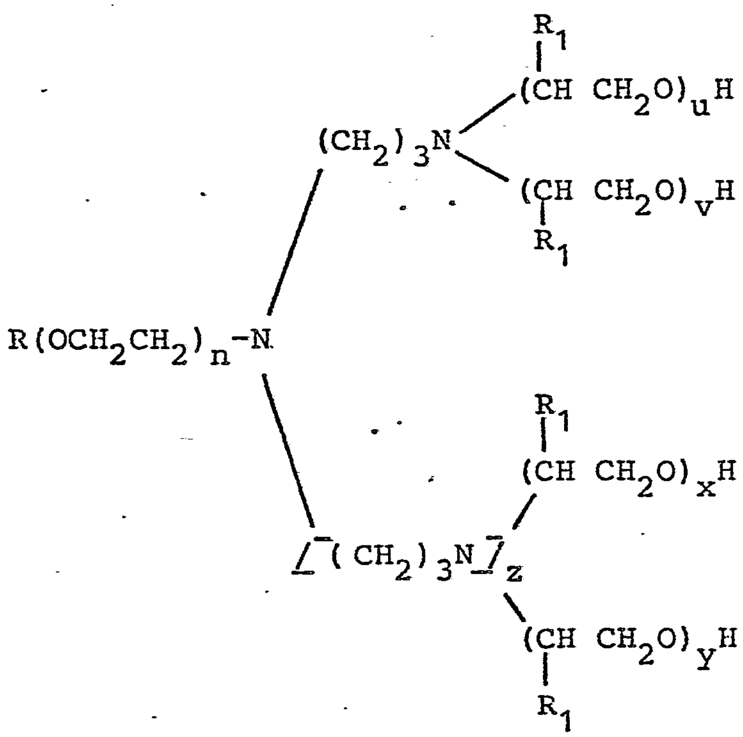

wobei R Alkyl oder Alkenyl mit jeweils 8 - 22 C-Atomen, vorzugsweise 14 - 22 C-Atomen oder $C_8$ - $C_{22}$ Alkylphenyl, $R_1$ Wasserstoff oder Methyl ist, n eine Zahl von 0 - 4, die Summe von u + v + x + y Zahlen von 0 - 10, vorzugsweise 0 - 6 und z eine Zahl von 0 - 2, vorzugsweise 1 bedeutet.

und

b) einer niedermolekularen Säure.

Als niedermolekulare Säuren kommen unter anderem in Frage $C_1$ - $C_4$ Carbonsäuren, wie Ameisensäure oder Essigsäure, Dicarbonsäuren wie Oxalsäure oder Malonsäure, Hydroxycarbonsäuren wie Milchsäure, anorganische Säuren wie Salzsäure oder Salpetersäure oder Amidosulfonsäure.

Die Amine a) können sowohl in reiner Form eingesetzt werden als auch in Mischung verschiedener derartiger Amine unter der angegebenen Formel. Von besonderem Interesse sind dabei Mischungen von Aminen der obigen Formel, wobei in einem Amin die Summe von n + v + x + y den Wert Null hat und in dem anderen Amin die Summe dieser Indices größer als Null ist.

Das molare Mischungsverhältnis der beiden Komponenten a) und b) reicht von 5 : 1 bis 1 : 5, vorzugsweise von 4 : 1 bis 1 : 2.

Die Herstellung des erfindungsgemäßen Hydrophobiermittels erfolgt durch einfaches Zusammenmischen der Einzelkomponenten bei Raumtemperatur.

Zur Herstellung handelsfähiger Konzentrate wird diese Mischung der Komponenten a) und b) dann mit Isopropanol allein oder einer Mischung aus Isopropanol und Wasser auf einen Gehalt von üblicherweise 30 - 60 Gew.-% eingestellt.

Die so hergestellten Konzentrate lassen sich ohne Schwierigkeiten in Wasser klar auf Anwendungskonzentrationen von 5 - 15 % verdünnen.

Mit dieser Verdünnung werden dann die geblähten Tonmineralien nach Verlassen des Blähofens im heißen Zustand besprüht oder in einem Mischwerk besprüht und anschließend getrocknet. Die Wirkstoffkonzentration auf dem geblähten Mineral soll für eine ausreichende Hydrophobierung 0,01 - 1 % betragen, vorzugsweise werden Konzentrationen von 0,05 - 0,4 % gewählt.

Nachfolgend werden einige erfindungsgemäße Hydrophobiermittel beschrieben, die durch einfache Mischung der sogenannten Komponenten hergestellt werden.

Beispiel 1

36,3 % N,N-bis-(propylenamin)talgfettamin
7,5 % N,N-bis-(propylenamin)talgfettamin + 4,7 Mol Ethylenoxid
6,2 % Ameisensäure
20,0 % Isopropanol
30,0 % dest. Wasser
klares, niedrigviskoses Konzentrat
Trübungspunkt + 3°C
Klarpunkt + 9°C
Hydrophobierwert nach Perlite-Test

| | | |
|---|---|---|
| WS | 0,1 % | 232 ml |
| " | 0,2 % | 235 ml |
| " | 0,4 % | 225 ml |

Beispiel 2

38,4 % N,N-bis-(propylenamin)stearylamin
5,0 % N,N-bis-(propylenamin)talgfettamin + 4,7 Mol Ethylenoxid
6,6 % Essigsäure
20,0 % Isopropanol
30,0 % dest. Wasser

klares, niedrigviskoses Konzentrat
Trübungspunkt + 7°C
Klarpunkt + 12°C

Hydrophobierwert nach Perlite-Test

| | | |
|---|---|---|
| WS | 0,1 % | 226 ml |
| " | 0,2 % | 238 ml |
| " | 0,4 % | 234 ml |

Beispiel 3

42,7 % N,N-bis-(propylenamin)talgfettamin + 0,5 Mol Ethylenoxid
7,3 % Ameisensäure
20,0 % Isopropanol
30,0 % dest. Wasser

klares, niedrigviskoses Konzentrat

| | |
|---|---|
| Trübungspunkt | + 12°C |
| Klarpunkt | + 15°C |

Hydrophobierwerte nach Perlite-Test

| | | |
|---|---|---|
| WS | 0,1 % | 235 ml |
| " | 0,15 % | 245 ml |
| " | 0,2 % | 245 ml |

Beispiel 4

44 % N,N-bis-(propylenamin)talgfettamin + 0,7 Mol Propylenoxid
6 % Ameisensäure
20 % Isopropanol
30 % dest. Wasser

fast klares, niedrigviskoses Konzentrat

| | |
|---|---|
| Trübungspunkt | + 17°C |
| Klarpunkt | + 19°C |

Hydrophobierwerte nach Perlite Test

| | | |
|---|---|---|
| WS | 0,1 % | 235 ml |
| " | 0,15 % | 232 ml |
| " | 0,2 % | 230 ml |

Beispiel 5

38,4 % N,N-bis-(propylenamin)stearylamin

5 % der Verbindung der Formel

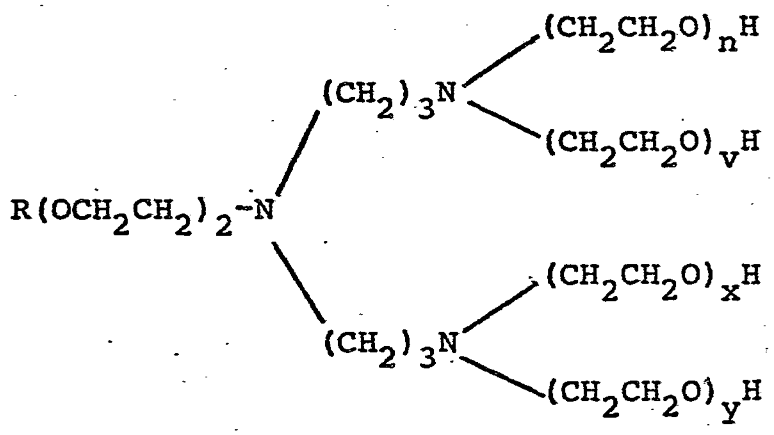

R = Talgfettalkyl, Summe von n, v, x und y = 4,7

6,6 % Essigsäure

20 % Isopropanol

30 % dest. Wasser

klares, niedrigviskoses Konzentrat

Trübungspunkt + 7°C

Klarpunkt + 12°C

Hydrophobierwerte nach Perlite-Test

| | | |
|---|---|---|
| WS | 0,1 % | 238 ml |
| | 0,2 % | 230 ml |
| | 0,4 % | 230 ml |

Vergleichsbeispiel 1

45,0 % Stearylamin
2,5 % Ameisensäure
2,5 % Stearinsäure
20,0 % Isopropanol
30,0 % dest. Wasser

weiße Paste
Schmelzpunkt 44 - 46°C

Hydrophobierwerte nach Perlite-Test

| | | |
|---|---|---|
| WS | 0,2 % | 190 ml |
| " | 0,5 % | 220 ml |
| " | 1,51 % | 226 ml |

Vergleichsbeispiel 2

50%ige Silikonemulsion
trübe, niedrigviskose Flüssigkeit

Hydrophobierwerte nach Perlite-Test

| | | |
|---|---|---|
| WS | 0,1 % | 215 ml |
| " | 0,2 % | 220 ml |
| " | 0,5 % | 220 ml |

Unbehandelte Perlite (Körnung 0 - 6) hatten eine Wasserabgabe von 135 ml von 250 ml.

Die in den obigen Beispielen beschriebenen Hydrophobiermittel wurden als 10%ige Verdünnung auf Perlit in einer Mischtrommel aufgesprüht und anschließend bei 110°C bis zur Gewichtskonstanz getrocknet.

Beim Perlite-Test werden 400 ml behandelte Perlite in einen 500 ml-Meßzylinder mit unterem Siebverschluß gefüllt und anschließend mit 250 ml Wasser übergossen, gemessen wird die durchlaufende Wassermenge.

"WS" bedeutet Gehalt an Wirksubstanz gebildet aus den Komponenten a) und b) in Gewichtsprozent.

PATENTANSPRÜCHE:



1. Wasserverdünnbare Hydrophobiermittel für geblähte Mineralien bestehend aus

a) einer Verbindung der Formel

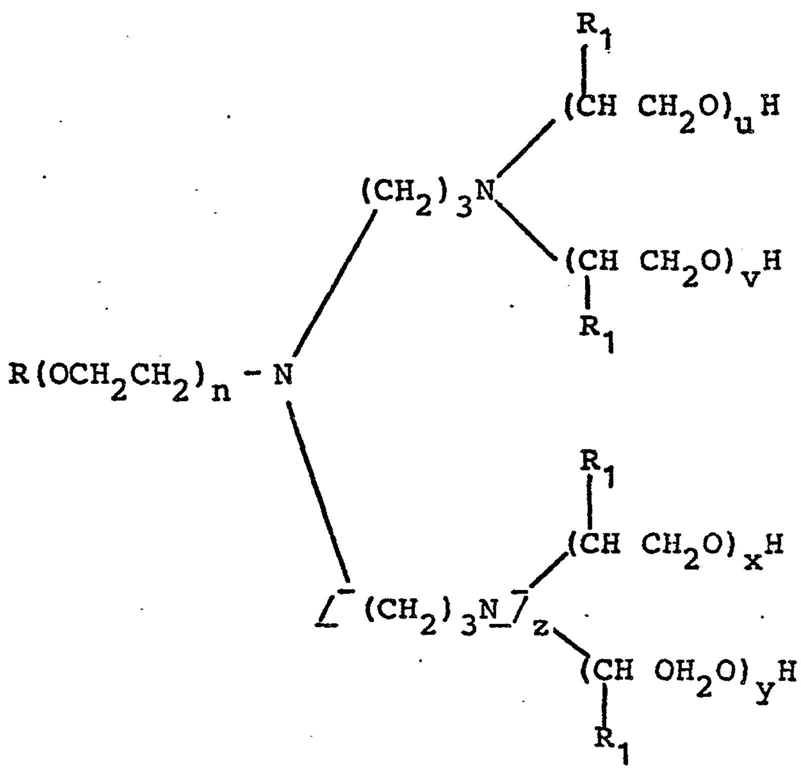

wobei R Alkyl oder Alkenyl mit jeweils 8 - 22 C-Atomen oder $C_8$ - $C_{22}$ Alkylphenyl, $R_1$ Wasserstoff oder Methyl ist, n eine Zahl von 0 - 4, die Summe von u + v + x + y Zahlen von 0 - 10 und z eine Zahl von 0 - 2 bedeutet
und

b) einer niedermolekularen Säure.

2. Wasserverdünnbare Hydrophobiermittel nach Anspruch 1, wobei in der Formel der Komponente a) R Alkyl oder

Alkenyl mit jeweils 14 - 22 C-Atomen, die Summe von n + v + x + y Zahlen von 0 - 6 und z 1 bedeutet.

3. Wasserverdünnbare Hydrophobiermittel nach Anspruch 1 bestehend aus der Komponente a) und der Komponente b) im molaren Mischungsverhältnis von 5:1 bis 1:5.

Europäisches Patentamt

**EUROPÄISCHER RECHERCHENBERICHT**

0076919

Nummer der Anmeldung

EP 82 10 7982

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | EP-A-0 032 664 (HOECHST AG) * Anspruch * | 1 | C 04 B 31/44<br>C 04 B 31/26 //<br>C 04 B 43/10 |
| Y | EP-A-0 025 998 (HOECHST AG) * Ansprüche 1-3 * | 1 | |
| Y | GB-A-2 011 383 (KEMANOBEL AB) * Ansprüche 1, 2, 5, 8 * | 1 | |
| A | FR-A-2 450 796 (NIPPON ASBESTOS CO. LTD.) * Anspruch 1; Seite 5, Zeilen 25-28, 38 * & DE - A - 3008755 | | |
| A | CHEMICAL ABSTRACTS, Band 93, Nr. 18, 3. November 1980, Columbus, Ohio, USA, Seite 89, Spalte 1, Abstract Nr. 169791q & JP - A - 80 73 746 (03.06.1980) | | **RECHERCHIERTE SACHGEBIETE (Int. Cl. 3)**<br>C 04 B 15/02<br>C 04 B 21/08<br>C 04 B 31/00<br>C 04 B 43/00<br>C 07 C 91/00<br>C 07 C 93/04 |

Der vorliegende Recherchenbericht wurde für alle Patentansprüche erstellt.

| Recherchenort | Abschlußdatum der Recherche | Prüfer |
|---|---|---|
| BERLIN | 26-11-1982 | STROUD J.G. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82